Europäisches Patentamt

European Patent Office

Office européen des brevets

(11) Veröffentlichungsnummer : **0 444 495 B1**

(12) **EUROPÄISCHE PATENTSCHRIFT**

(45) Veröffentlichungstag der Patentschrift :
25.08.93 Patentblatt 93/34

(51) Int. Cl.⁵ : **B01J 37/00,** B01J 37/02, B01J 33/00

(21) Anmeldenummer : **91102249.9**

(22) Anmeldetag : **18.02.91**

(54) **Verfahren zur Verbesserung des Thermoschockverhaltens von Monolith-Katalysatoren.**

(30) Priorität : 01.03.90 DE 4006346

(43) Veröffentlichungstag der Anmeldung :
04.09.91 Patentblatt 91/36

(45) Bekanntmachung des Hinweises auf die Patenterteilung :
25.08.93 Patentblatt 93/34

(84) Benannte Vertragsstaaten :
AT BE CH DE ES FR GB IT LI NL SE

(56) Entgegenhaltungen :
EP-A- 0 149 912
EP-A- 0 266 257
US-A- 4 483 940

(73) Patentinhaber : **Degussa Aktiengesellschaft**
**Weissfrauenstrasse 9**
**D-60311 Frankfurt (DE)**

(72) Erfinder : **Schmidt, Felix, Dr.**
**Maurice Sadorge 11**
**W-7888 Rheinfelden (DE)**
Erfinder : **Mergner, Bernd**
**Neumarkter Strasse 10**
**W-7888 Rheinfelden (DE)**
Erfinder : **Domesle, Rainer, Dr.**
**Rannenbergring 56**
**W-8755 Alzenau-Kälberau (DE)**

Jouve, 18, rue Saint-Denis, 75001 PARIS

## Beschreibung

Die Erfindung betrifft ein Verfahren zur Herstellung von Monolith-Katalysatoren mit verbesserten Thermoschockeigenschaften aus einem inerten keramischen monolithischen Träger, einem Film aus katalyseförderndem Metalloxid auf dem Träger und in dem Film verteilten Edel- und/oder Unedelmetallen als katalytisch aktiver Komponente. Insbesondere soll das Thermoschockverhalten von Katalysatoren mit monolithischen Trägern aus Cordierit oder Mullit verbessert werden.

Keramisches Trägermaterial enthält von Natur aus Mikrorisse, die bei schockartiger thermischer Beanspruchung, z. B. schnellem Auf- und Abheizen, als Dehnungsfugen wirken und dem keramischen Material eine gewisse Thermoelastizität verleihen können.

Es hat sich herausgestellt, daß diese Elastizität abnimmt, wenn der keramische Träger mit einer wäßrigen Dispersion aus aktivem Metalloxid, z.B. $\gamma$-Aluminiumoxid, und Promotoren, wie Cer, Zirkon, Eisen, Lanthan, Nickel in Salz- und/oder Oxidform, beschichtet worden ist. Das Thermoschockverhalten verschlechtert sich dabei und es kommt schon bei geringer Temperaturbeanspruchung zur zerstörenden Rißbildung im Träger bzw. in dem fertigen, die katalytisch aktive Komponente, z. B. Platingruppenmetalle enthaltenden Katalysator. Dies wurde auf das Eindringen gelöster und/oder feinstteiliger korpuskularer Stoffe in die Mikrorisse zurückgeführt.

Es wurde weiterhin davon ausgegangen, daß die in den Mikrorissen eingelagerten Stoffe die Dehnungsfugen schließen und dem keramischen Material die Thermoelastizität nehmen und so das das Thermoschockverhalten verschlechtern. Darüber hinaus war nicht auszuschließen, daß die in den Mikrorissen verbleibenden Stoffe aufgrund unterschiedlicher thermischer Ausdehnungskoeffizienten zu einer weiteren Schwächung des Trägermaterials beitragen.

In der europäischen Patentanmeldung EP-A-0 266 257 wird zur Verbesserung der Haftung der Dispersion aus den aktiven Metalloxiden auf keramischen oder metallischen Monolithen vorgeschlagen, der wäßrigen Dispersion der Metalloxide eine geringe Menge an natürlichen Gummiverbindungen aus der Klasse der Heteropolysaccharide, wie zum Beispiel Xanthangummi, zuzufügen. Dies soll die Haftung der Dispersionsbeschichtung besonders unter den rauhen Bedingungen beim Betrieb des Katalysators am Motor mit starken Vibrationen und schnellen Temperaturänderungen verbessern. Eine Lösung der oben dargelegten Riß-problematik wird damit jedoch nicht erreicht.

US-A-4 483 940 beschreibt eine Vorbelegung von Monolithträgern mit wasserlöslichen Polymeren, die die Mikrorisse verstopfen und das Eindringen von Stoffen beim Aufbringen der Katalysatorzusammensetzung verhindern sollen. Diese Polymerstoffe haben den Nachteil, daß sie von wäßrigen Oxid-Dispersionen herausgelöst werden und diese dadurch nachteilig beeinflussen können.

Aus der EP-B-0 149 912 ist ein Verfahren zur Herstellung eines beschichteten, Mikrorisse enthaltenden keramischen Wabenaufbaus, bei dem die Mikrorisse in dem Wabenaufbau mit einem Material gefüllt werden, das bei einer Temperatur unterhalb der Sintertemperatur der aufgebrachten Beschichtung weggebrannt wird, beschrieben.

Es beinhaltet u.a. folgende Verfahrensschritte:

a) Tränken mit einer geschmolzenen wasserunlöslichen organischen Verbindung, die bei Raumtemperatur fest und im wesentlichen nicht flüchtig ist;

b) Festwerdenlassen der zur Tränkung verwendeten Verbindung durch Abkühlen;

c) Aufbringen eines gegebenenfalls Katalysatorsubstanz enthaltenden Tauchüberzugs und

d) Ausbrennen des durch die Tränkung eingebrachten Stoffes sowie Imprägnieren mit katalytisch aktivem Material, sofern noch nicht im Tauchüberzug enthalten.

Das bekannte Verfahren in seiner vorstehend erläuterten, weil hier relevanten Ausgestaltung tränkt den Trägerkörper in einer Schmelze des Füllmittels. Der Träger muß vor der Abkühlung zur Verfestigung des Füllmittels von überschüssigem flüssigen Füllmittel befreit werden, ein Vorgang, der nicht nur in der technischen Praxis auf erhebliche Schwierigkeiten stoßen wird. Es resultiert eine gänzlich mit der hydrophoben Füllsubstanz überzogene Trägeroberfläche, auf der sich ein Metalloxidfilm aus einer wäßrigen Dispersion ohne vorheriges Carbonisieren der Füll- bzw. Beschichtungssubstanz nicht befriedigend abscheiden und haften läßt. Eine Carbonisierung ist jedoch in der genannten Patentschrift für die hier relevante Ausführungsform nicht offenbart.

Es wurde nun gefunden, daß eine wesentlich einfachere, füllmittelsparende und dabei die Haftung eines aus wäßriger Dispersion abzuscheidenden Oxidfilms nicht beeinträchtigende sichere Versiegelung der Mikrorisse durch "Einschmelzen" von als feinste Feststoffteilchen auf dem Träger aufgebrachten schmelzbaren und ausbrennbaren wasserunlöslichen Füllmitteln, wie höheren Kohlenwasserstoffen, insbesondere Paraffinwachs oder Polymeren, wie Polyäthylenwachs, erzielt werden kann.

Diese füllen, wenn sie geschmolzen werden, aufgrund des Kapillareffektes die Mikrorisse vollständig aus

2

und verbleiben während des Beschichtungsvorganges z.B. mit wäßrigen, gegebenenfalls Promotorsalze und-/oder -oxide enthaltenden γ-Aluminiumoxiddispersionen in den Mikrorissen, ohne den Beschichtungsvorgang nachteilig zu beeinflussen.

Nach Abschluß des Beschichtungsvorganges wird getrocknet und das verwendete Füllmaterial ausgebrannt. Die temporäre "Versiegelung" der Mikrorisse mit einem schmelzbaren, ausbrennbaren wasserunlöslichen Mittel führt, wenn sie gemäß der Erfindung ausgeführt wird, zu einer deutlichen Verbesserung des Thermoschockverhaltens der fertigen Katalysatoren.

Gegenstand der Erfindung ist demgemäß ein Verfahren zur Herstellung von Monolith-Katalysatoren mit verbesserten Thermoschockeigenschaften aus einem inerten keramischen monolithischen Träger, einem Film aus katalysefördemdem Metalloxid auf dem Träger und in dem Film verteilten Edel- und/oder Unedelmetallen als katalytisch aktiver Komponente, wobei man in den Träger vor dem Aufbringen von Metalloxidfilm und katalytisch aktiver Komponente ein wasserunlösliches, schmelzbares und ausbrennbares organisches Füllmittel bei Temperaturen oberhalb dessen Schmelzpunkts einbringt, den Träger dann unter diesen Schmelzpunkt abkühlt, hierauf den gegebenenfalls katalytisch aktive Komponente enthaltenden Metalloxidfilm durch Dispersionsbeschichtung aufbringt, trocknet, das Füllmittel an der Luft bei Temperaturen oberhalb 500° C ausbrennt und dann, wenn nicht schon geschehen, die katalytisch aktive Komponente auf den Metalloxidfilm in an sich bekannter Weise aufbringt.

Das Verfahren ist dadurch gekennzeichnet, daß der Träger durch Behandeln mit einer wäßrigen Dispersion des Füllmittels, vorzugsweise eines paraffinischen Wachses mit einem Schmelzpunkt oberhalb 80° C, bei Raumtemperatur mit Teilchen des Füllmittels vorbelegt, der so vorbelegte Träger getrocknet und anschließend über den Schmelzpunkt des Füllmittels erhitzt wird.

Für das im erfindungsgemäßen Verfahren vorgesehene Erhitzen des mit feinsten Teilchen des Füllmittels vorbelegten Trägers nach sorgfältigem Trocknen genügen im allgemeinen 10 - 90, vorzugsweise 15 - 60 Minuten, wobei die Temperatur bevorzugt 30 - 70° C über dem Schmelzpunkt des Füllmittels liegt.

Vorteilhaft wird das aufzubringende Füllmittel in Wasser bei erhöhter Temperatur in Anwesenheit eines Emulgators und unter Einwirkung hoher Scherkräfte emulgiert und die Emulsion dann durch Abkühlen auf Raumtemperatur in die zur Anwendung kommende feinstteilige Feststoffdispersion überführt.

Man kann den mit dem Füllmaterial versehenen Träger nach Durchführung des Schmelz- und Abkühlvorgangs auf übliche Weise mit gegebenenfalls Promotorstoffe enthaltendem Aluminiumoxid beschichten, Trocknen, das Füllmaterial ausbrennen und dann die katalytisch aktive Komponente, z. B. eine Platingruppenmetalle enthaltende Elementkomposition aufbringen. Letztere kann aber auch bereits im Aluminiumoxid enthalten sein. Blanke und gemäß Erfindung "versiegelte" Träger zeigen keinerlei Unterschiede in der Haftung der fertigen Beschichtung.

In den folgenden Beispielen wurden jeweils monolithische Cordieritträger der Abmessungen 93 x 76 mm mit 46.5 Zellen/cm$^2$ und 0,17 mm Wandstärke aus der selben Herstellung eingesetzt.

Vergleichsbeispiel 1

3 Träger ohne Vorbehandlung mit Füllmittel wurden mit einer wäßrigen Dispersion, enthaltend

```
72 Gew.% Al₂O₃   (als Feststoff)

20 Gew.% CeO₂    (als Salz)

 5 Gew.% ZrO₂       "        "

 3 Gew.% Fe₂O₃   ( "        "
```

beschichtet, bei 150° C getrocknet und 4 Stunden bei 700° C getempert.

Die erhaltene Oxid-Beschichtung wurde mit 0,2 g pro Trägereinheit Platin und Rhodium im Verhältnis 5 : 1 imprägniert, bei 150° C getrocknet und bei 600° C in Formiergas (5 Vol.% $H_2$, 95 Vol% $N_2$) getempert.

Vergleichsbeispiel 2

3 Träger wurden in einer wäßrigen, 5 Gew.%igen Moviollösung getaucht, die überschüssige Lösung ausgeblasen und die Träger anschließend 1 Stunde mit 120° C warmer Luft durchströmend getrocknet. Die Träger wurden hierauf mit der Dispersion analog Beispiel 1 beschichtet. Die erhaltene Oxid-Beschichtung wurde mit 0,2 g pro Trägereinheit Platin und Rhodium im Verhältnis 5 : 1 imprägniert, bei 150° C getrocknet und bei 600° C in Formiergas (5 Vol.% $H_2$,, 95 Vol.% $N_2$) getempert.

## Beispiel 1

3 Träger wurden bei Raumtemperatur in einer wäßrigen Dispersion, hergestellt aus einer mit Emulgator Lamacit® APG bei Temperaturen um 125° C unter Druck und scherendem Rühren hergestellten wäßrigen Emulsion von 1,5 Gew.% eines handelsüblichen, geradkettigen Paraffinwachses mit einem Schmelzpunkt von 110° C getaucht, ausgeblasen, getrocknet und eine Stunde mit 150° C warmer Luft durchströmend behandelt. Die Träger wurden mit der Dispersion analog Vergleichsbeispiel 1 beschichtet.

Die erhaltene Oxid-Beschichtung wurde mit 0,2 g pro Trägereinheit Platin und Rhodium im Verhältnis 5 : 1 imprägniert, bei 150° C getrocknet und bei 600° C in Formiergas (5 Vol.% $H_2$, 95 Vol.% $H_2$) getempert.

## Beispiel 2

Die Haftfestigkeiten der in den Vergleichsbeispielen 1 und 2 und in Beispiel 1 erhaltenen Beschichtungen wurden durch Wiegen vor und nach einem 3-minütigen Abblasen der beschichteten Trägereinheiten mit Luft von 6 bar Überdruck bestimmt. Im Durchschnitt wurden folgende Mengen an Beschichtung abgeblasen:

|  |  | Gewichtsverlust in g |
|---|---|---|
| Vergleichsbeispiel | 1 | 0,17 |
| Vergleichsbeispiel | 2 | 0,60 |
| Beispiel | 1 | 0,20 |

Die Messung der Thermoschockbeständigkeit begann mit 30-minütigem Einstellen in einen Ofen bei 750° C. Nach Entnahme aus dem Ofen wurden die Teile 30 Minuten bei Raumtemperatur an Luft stehen gelassen. Dieser Zyklus wurde unter schrittweiser Erhöhung der Ofentemperatur um jeweils 25° C für jede Trägereinheit dreimal wiederholt. Die Temperatur, bei der sichtbare Risse auftreten, ist als Ausfalltemperatur definiert. Die folgende Tabelle gibt die durchschnittliche Ausfalltemperatur der jeweils eingesetzten Träger an:

|  |  | Ausfalltemperatur (° C) |
|---|---|---|
| Vergleichsbeispiel | 1 | < 750 |
| Vergleichsbeispiel | 2 | 775 |
| Beispiel | 1 | 825 |
| blanker Träger |  | > 900 |

## Beispiel 3

Je 3 Mullit-Träger der Abmessung 15 x 15 x 15 cm mit einer Zelldichte von 16 Zellen/cm$^2$ und einer Zellwandstärke von 0,5 mm wurden ohne und mit der erfindungsgemäßen Vorbehandlung (im letzteren Falle gemäß Beispiel 1) mit einer wäßrigen Dispersion der Zusammensetzung 80 Gew.% $\gamma$-$Al_2O_3$ (als Feststoff), 17 Gew.% $CeO_2$ (als Nitrat) und 3 Gew.% $ZrO_2$ (als Carbonat) beschichtet, bei 150° C getrocknet und 4 Stunden bei 600° C getempert. Die erhaltene Oxid-Beschichtung wurde mit 5,3 g pro Trägereinheit Platin und Rhodium im Verhältnis 5 : 1 imprägniert, bei 150° C getrocknet und bei 600° C in Formiergas (5 Vol.% $H_2$, 95 Vol.% $N_2$) getempert.

Die Vorbehandlung mit Füllmittel erfolgte wiederum analog Beispiel 1. Die Beschichtung zeigte keinen Unterschied in der Haftung zwischen den vorbehandelten und den nicht vorbehandelten Proben. Die fertigen Katalysatoren wurden direkt in einen 380° C warmen Ofen eingestellt, 1 Stunde darin belassen, dann herausgenommen und an Luft abgekühlt. Die Träger wurden durch Abklopfen mit einem 400 g-Hammer auf Risse untersucht. Risse erzeugen, auch wenn sie von außen nicht sichtbar sind, einen scheppernden Klang.

Alle vorbehandelten Teile waren einwandfrei. Zwei der nicht vorbehandelten Teile hatten nicht sichtbare aber "hörbare Risse". Vor der Beschichtung waren die Träger beim Abklopfen einwandfrei gewesen.

**Patentansprüche**

1. Verfahren zur Herstellung von Monolith-Katalysatoren mit verbesserten Thermoschockeigenschaften aus einem inerten keramischen monolithischen Träger, einem Film aus katalyseförderndem Metalloxid auf dem Träger und in dem Film verteilten Edel- und/oder Unedelmetallen als katalytisch aktiver Komponente, wobei man in den Träger vor dem Aufbringen von Metalloxidfilm und katalytisch aktiver Komponente ein wasserunlösliches, schmelzbares und ausbrennbares organisches Füllmittel bei Temperaturen oberhalb dessen Schmelzpunkts einbringt, den Träger dann unter diesen Schmelzpunkt abkühlt, hierauf den gegebenenfalls katalytisch aktive Komponente enthaltenden Metalloxidfilm durch Dispersionsbeschichtung aufbringt, trocknet, das Füllmittel an der Luft bei Temperaturen oberhalb 500° C ausbrennt und dann, wenn nicht schon geschehen, die katalytisch aktive Komponente auf den Metalloxidfilm in an sich bekannter Weise aufbringt,
   **dadurch gekennzeichnet,**
   daß der Träger durch Behandeln mit einer wäßrigen Dispersion des Füllmittels bei Raumtemperatur mit Teilchen des Füllmittels vorbelegt, der so vorbelegte Träger getrocknet und anschließend über den Schmelzpunkt des Füllmittels erhitzt wird.

2. Verfahren nach Anspruch 1,
   **dadurch gekennzeichnet,**
   daß es sich bei dem Füllmittel um einen paraffinischen Wachs mit einem Schmelzpunkt oberhalb 80° C handelt.

**Claims**

1. A process for the production of monolithic catalysts having improved thermal shock resistance and consisting of an inert ceramic monolithic support, a film of catalysis-promoting metal oxide on the support and noble and/or base metals distributed in the film as catalytically active component, a water-insoluble, fusible and burnable organic filler being introduced at temperatures above its melting point into the support before application of the metal oxide film and the catalytically active component, the support then being cooled below that melting point and the metal oxide film optionally containing catalytically active component subsequently being applied by dispersion coating and dried, the filler being burnt off in air at temperatures above 500°C and, unless it is already present, the catalytically active component being applied to the metal oxide film by methods known per se, characterized in that the support is precoated with particles of the filler at room temperature by treatment with an aqueous dispersion of the filler, , the support thus precoated is dried and is then heated beyond the melting point of the filler.

2. A process as claimed in claim 1, characterized in that the filler is a paraffin wax having a melting point above 80°C.

**Revendications**

1. Procédé de préparation de catalyseurs monolithiques à propriétés améliorées de résistance aux chocs thermiques à partir d'un support monolithique céramique inerte, d'un film d'oxyde métallique sur le support, assistant à la catalyse, et de métaux précieux et/ou non précieux répartis dans le film en tant que composant catalytiquement actif, procédé dans lequel on dépose sur le support, avant le dépôt du film d'oxyde métallique et du composant catalytiquement actif, une charge organique combustible , fusible et insoluble dans l'eau, à des températures supérieures à son point de fusion, on refroidit ensuite le support en-dessous de ce point de fusion, on dépose le cas échéant le film d'oxyde métallique contenant le composant actif catalytiquement par revêtement d'une dispersion, on sèche, on brûle la charge à l'air à des températures supérieures à 500°C et ensuite, si on ne l'a pas déjà fait, on dépose le composant catalytiquement actif sur le film d'oxyde métallique de la manière connue en soi, procédé caractérisé en ce qu'on

5

traite le support avec une dispersion aqueuse de charge et on enduit à température ambiante avec des particules de charge, on sèche le support ainsi enduit et ensuite on chauffe au-delà de la température de fusion de la charge.

2. Procédé selon la revendication 1, caractérisé en ce qu'il s'agit pour la charge d'une cire paraffinique d'un point de fusion supérieur à 80°C.